# EUROPEAN PATENT SPECIFICATION

(11) **EP 1 557 063 B1**
(45) Date of publication and mention of the grant of the patent: **18.05.2011**
(21) Application number: 02808070.3
(22) Date of filing: 04.11.2002
(51) Int. Cl.: H04W 4/22

(54) **Safely making an emergency call from a communication device**
Sichere Durchführung eines Notrufs von einem Kommunikationsendgerät
Sûre effectuation d'un appel d'urgence en utilisant un terminal de communication

(30) Priority: 31.10.2002 EP 02024265
(43) Date of publication of application: 27.07.2005
(73) Proprietor: Cinterion Wireless Modules GmbH, 81669 München (DE)
(72) Inventor: SCHOLZ, Frank, 87757 Kirchheim (DE)
(74) Representative: Eisenführ, Speiser & Partner
(86) International application number: PCT/EP2002/012292
(87) International publication number: WO 2004/040934

(56) References cited:
- WO-A-01/89250
- WO-A-92/16077
- WO-A-97/30561
- FR-A- 2 787 278
- GB-A- 2 360 176
- US-A- 5 367 296
- US-B1- 6 240 285
- US-B1- 6 324 392

## Description

### Field of the Invention

This invention relates to a localisation method according to the preamble part of claim 1 used in connection with emergency calls in mobile communications systems.

### Background of the Invention

The demand for security is rapidly growing and thus advanced technology in communications, safety, and security systems is mandatory in order to maintain, track and respond to alarm signals. A wide variety of emergency call systems has been used, including direct connected, i. e. hard wired systems, wireless systems, and telephone systems.

If an emergency call is made, furthermore a localisation of the communication device and its respective user is desirable. Within communications systems various methods for determining a position are known, such as using the cell identification (cell ID), or localisation methods within a cell, e. g. E-OTD (Enhanced Observed Time Difference).

WO 97/30561 discloses a mobile station which is provided with a preferred roaming selection list which identifies and prioritizes networks to which that mobile station can be connected. Using the preferred roaming selection list, a mobile station can be determine which of a plurality of different networks that are broadcasting in its current geographical should be selected for connection. In this way, the mobile station will connect with the highest ranked network in the list and is provided with roaming data associated with any type of system which can be accessed, changed and updated by both the user and the operator.

US 6,240,285 B1 discloses a wireless telephone network, such as cellular, PCS networks and other mobile radio services networks handling emergency calling services between a mobile station and a public safety answering point. If a caller is not satisfied with the quality of the link to the public safety answering point and initiates a second emergency call within a predetermined interval from the first call, the mobile station will select and open that operating system of the network for the second call. The expectation is that conditions will be different on the alternate operating system and provide a quality of service that the emergency callers subjectively finds more acceptable.

WO 92/16077 A discloses a method according to the preamble part of claim 1 wherein a radio controller is capable to alter the configuration of the radio in order for the radio to transmit the emergency information signal to a number of different types of communication systems having different operating modes. The number of systems would be limited to the number of systems which radio could access.

However, to make use of emergency call systems with localisation methods, it is necessary to be connected to the respective cellular network. In other words, no emergency call can be made if no network is available.

### Disclosure of the Invention

Based on the foregoing description it is an object of the invention to provide a method, an apparatus and a system for safely making an emergency call, regardless of the respective cellular network connection.

The object of the invention will be achieved with a method, a communication device and a system which are characterised by what is disclosed in the appended independent claims. Advantageous embodiments of the present invention will be presented in the dependent claims.

The invention is based on the idea of selecting one network out of a plurality of possibly available networks and sending an emergency signal over the selected network. According to preferred embodiments of the invention, one of these communications networks may be an emergency location transmitter (ELT) network, e.g. an airborne or other safety network. According to another or the same preferred embodiment of the invention one of these communication networks may be a cellular, e.g. a mobile phone, network. Such a safety network may exist independently from any cellular communications network.

Thus, upon activating an emergency call routine at a communication device, a module for broadcasting over the safety network can be enabled, if a cellular network is not available.

By broadcasting we understand a transmitting to all stations in the range of the communication device.

Now two cases are to be distinguished

### 1) A cellular network is available:

In this case a emergency call procedure is performed by using the cellular network. Additional services, e.g. a more accurate localisation, can be requested optionally from a suitable instance of the safety network, e.g. a a safety control centre.

### 2) No cellular network is available

In this case a emergency call procedure is performed by using an a safety network.

### Brief description of the drawings

In the following, the invention will be described by means of preferred embodiments with reference to the accompanying drawing, in which:
- Figure 1: is an exemplary embodiment of an apparatus aligned to make emergency calls by pushing only one button,
- Figure 2: shows a schematic block diagram concerning the relations between user, network providers and safety control centres in the case of public sponsorship of the emergency number, and
- Figure 3: shows a similar diagram for private and public sponsorship.

### Detailed description of the invention

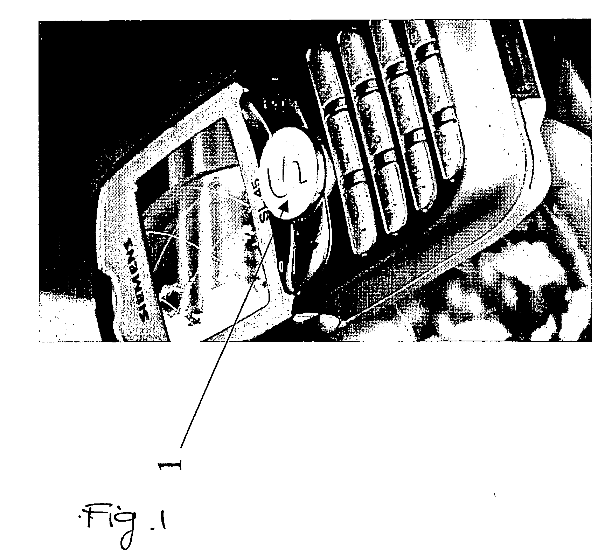

Reference is now made to Figure 1. In this preferred embodiment the underlying idea is that help can be reached by just pushing one single button (1) in a communication device that is widespread, e.g. a mobile phone or cell phone or any mobile communication device. Hence the communication device may be not only a cell phone but also any other kind of mobile equipment allowing to establish a connection to a cellular communications network.

The button 1 initiates an emergency call routine, by which an emergency call is performed using or utilising a network that is determined by the routine. Thus a world-wide safety system would be available by using a cell phone, even if there is no cellular communications network such as GSM (Global System for Mobile Communications) available. This concept complies with the risen safety awareness anywhere in the world. Wide availability can be achieved by using cell phones or generally mobile equipment which are lowcost widespread communication devices.

By cellular (communications) network we refer to any network such as GSM (Global System for Mobile Communications), TDMA/CDMA (Time Division Multiple Access / Code Division Multiple Access) based networks, UMTS (Universal Telecommunications System), WLAN (Wireless Local Area Network)-Systems,

The concept makes use of an emergency or global safety network, e.g. an airborne network comprising satellites and/or aircraft. This will be described below in detail:

Typical safety networks may exist independently from any cellular network and are based on e.g. airborne objects and/or satellites and/or radio beacons. As the beacons, that can be operated as a transponder and/or a transmitter, can be mobile, we refer to them as a network with mobile transmitter stations or an emergency network in the framework of the application. The mobile beacons can be placed e.g. on a aircraft or on a vessel.

In the following some more details are given about safety networks: By law, all civil and military aircraft carry an emergency location transmitter (ELT) on board. The ELT begins transmitting when it is activated by the gravitational forces caused by an aircraft crash. When another aircraft or satellite receives an emergency signal it transfers information about the crash location to the respective air search and rescue centres. More generally spoken the aircrafts and satellites are able to receive signals from emergency radio beacons and relay them to ground stations, which, in turn, process the signal to determine where the beacon is located. The ground stations then relay this information to search and rescue authorities. The system has four parts: emergency radio beacons, which call for help; aircrafts and satellites to receive said calls; ground stations, which get the message; and control centres, which sound the alarm.

The emergency radio beacon has two functions: if somebody is in distress in a remote area he can make an emergency call and secondly by doing so also information is provided about his location. There are three kinds of radio beacons, classified by who uses them. Aircrafts normally have an emergency location transmitter (ELT). At sea, the vessel should have an emergency position indicating radio beacon (EPIRB). Personal location beacons (PLB) are for land activities such as hiking or camping in the wilderness. The radio beacons can transmit signals on certain emergency frequencies normally located in (but not limited to) the VHF (Very High Frequency) region between a hundred and a few hundred MHz. Every signal of a beacon can be detected by airborne objects or satellites or can be repeated by another beacon, e.g. carried by aircraft passing by, which is then functioning as a transponder.

To sum up the emergency network is used for communication, identification and localisation. Therefor, the proven ELT (Emergency Location Transmitter) technology principle is used. By identification of a communication device or its respective user the identification can be based on the telephone number, the IMEI (International Mobile Equipment Identity) etc.

In the context of the application by airborne network not only a network provided by the satellites is covered, but also a network based upon the satellites in combination with transponders or transmitters placed in aircrafts or vessels.

An ELT activator suitable for a communication device may consist of a detector sensible to gravitational forces, sensible to smoke, sensible to pressure, temperature or various other environmental parameters. Apart from environmental parameters the ELT activator may also detect certain personal parameters, by which conclusions about the person's health state can be made.

Now an exemplary method is described to perform the locating routine:
1. A security button 1 e.g. as shown in Figure 1 is pushed. This activates an emergency call routine. The emergency routine comprises the following steps, which are partially optional:
2. In case the mobile is switched off it may activate the mobile. In case or as soon as the mobile is switched on, a module for broadcasting over the emergency network, that may operate on frequencies distinct from those of the cellular communication network, is activated. This activation can be done optionally also regardless of the possibility to establish a connection to a cellular communication network. By activating the module for broadcasting an immediate enabling can be understood or the starting of a countdown period after which the module is enabled. Said module is also referred to as ELT module, the respective activator as ELT activator. The ELT module is off during normal operation e.g. in order to reduce power consumption.
3. Now a distinction has to be made whether a connection to a cellular communications network is available or not:
   a) A cellular communications network is available: In case there is a contact to a cellular network, the activating of the emergency call routine initiates a speech connection, which is established via the cellular communications network to a safety control centre. A further identification and localisation of the caller is done via the speech connection (descriptions of the user) or automatic methods of the cellular network, such as using the cell identifier or E-OTD. Additionally a predefined routine may be started for providing additional optimal help, i.e. e.g. using localisation methods of the emergency network.
   b) No cellular communications network is available: Without a contact to a cellular communications network contact, an emergency procedure via the emergency network, e.g. a ELT distress signal is automatically activated. Then the safety cell phone broadcasts an ELT signal. This signal will be received by an emergency network, e.g. an airborne network and it is attempted to connect to a safety control centre or the receiving station will inform the safety control centre and/or rescue and help services.
4. Hence in both cases, the transmitter of the emergency signal or the user of the communication device can be located accurately via radio and/or cellular communications network bearing. The safety control centre will take further actions in the field of emergency or distress phases. Safety control centre will then coordinate other service suppliers, e.g. an automobile association a fire brigade.

To recapitulate, the choice exists to locate distressed persons via a cellular network, e.g. GSM, and/or ELT signals from a cell phone. Furthermore, a voice connection can be established via GSM if a GSM network any other cellular network is available. A safety control centre (SCC) is foreseen to coordinate optimal help.

A preferred embodiment of an apparatus allowing above described procedures of making an emergency call comprises typically a safety or security button 1, which by being pushed activates the emergency call routine. Furthermore, it comprises an ELT module which allows to transmit and/or transpond emergency signals. It also comprises optionally an ELT activator, that activates the ELT module, as already described above. It may further comprise an additional power supply for the ELT module. For aeroplanes, as already described, the ELT activator reacts somehow on gravitational forces. In the framework of the invention, however, the ELT activator can be also realised differently, which will be explained below. An additional power supply allows longer operation of the ELT module. An automatic communication setup helps during the establishment of a speech connection. A programmable automatic log-on mode allows accessing the emergency call routine even if the user is not in position to do so manually. Preferably, the body of the communication device, e.g. the cell phone is shock resistant. Also, an emergency amplification of the GSM signal can be foreseen.

Now another exemplary embodiment of the above-mentioned emergency routine will be described in further details. As already said, by pushing the safety button 1 an emergency routine is started within the cell phone: therefore, first an ELT activity countdown is started within the cell phone, regardless of any network connection. After the ELT activity countdown the ELT module is enabled. Then, it has to be differentiated between a situation with a cellular communications network contact and a situation without a cellular communications network contact. In case a contact to a cellular communications network can be established, pushing the safety button 1 means, that the safety control centre (SCC) is being rung by the cell phone. The caller can report a distress and provide further details if he is able to and it is possible. The safety control centre tries to identify the caller, the nature of the problem and may retrieve possible medical data of the caller, if the caller is in position to speak. Furthermore, the safety control centre tries to determine geographical coordinates, e.g. via voice and/or cellular communication network data. Within a cellular network various methods for locating are known, e.g. the above-mentioned E-OTD method. As the spatial resolution of localisation methods within a cellular communications network is limited, it is decided by the safety control centre, whether ELT search is necessary to achieve an enhanced localisation. Having made this decision, the safety control centre transmits an ELT activation or deactivation code to the cell phone.

In the case without any cellular communications network contact an automatic activation of the ELT distress signal is performed. Upon this distress signal emergency procedures are being organised by the SCC, example giving alarming the police, the fire brigade, ambulance, air rescue, etc. Furthermore, the safety control centre submits location data to search and rescue forces with a link to the activated ELT signal or by supporting then without ELT guidance. An emergency assistance operator may confirm the completion of an operation to the safety control centre.

In a further embodiment it is foreseen that the safety cell phone can be activated remotely in order to search for missing persons, children or cars. To prevent unwanted use of this method this modus of remote activation has to be enabled by the user of the cell phone. Also, an automatic check or a safety centre search signal in predetermined time interval may be foreseen, even if the power of the cell phone is switched off.

The various embodiments of the invention exhibit major advantages for a safety cell phone concept. The ELT modules, which are to be integrated, are customary in air or vessel traffic. They can broadcast ELT signals in predefined emergency frequencies. The technology within the cell phone has to be adapted and an integration of the safety feature in a standard cell phone housing is possible.

The above-mentioned safety control centre may offer a 24 hour service around the year, voice communication in most common languages of the respective area, a direct interface to emergency operators and cellular network providers, and the access to personal or health data of any cell phone owner. The safety control centre may be a public or private body, which is to be financed accordingly.

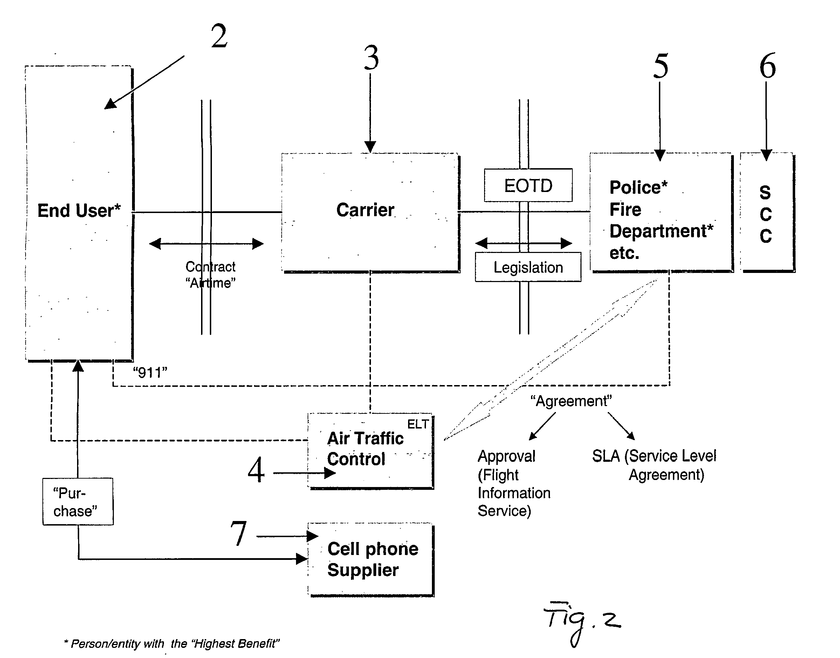

In Figure 2 a schematic drawing between users, network providers (carriers) and safety instances are shown: the end user will purchase a cell phone with contract by a supplier 7. The end user 2 may access air traffic control (ELT) 4 via his/her ELT module. Furthermore, the end user 2 can reach emergency instances 5 such as police, fire department, etc. via an emergency number, e.g. 911. The end user 2 can have a normal cellular communications network connection provided by the carrier 2 of the respective cellular communications network. The carrier 2 himself provides data about localisation run by e.g. EOTD to the security instance 5 such as police or the fire brigade, etc. This information transfer is mainly limited by legislation. The security instance 5, which may be part of the safety control centre 6, have an agreement with the air traffic control 4 , thus they can also access the far more exact ELT localisation data.

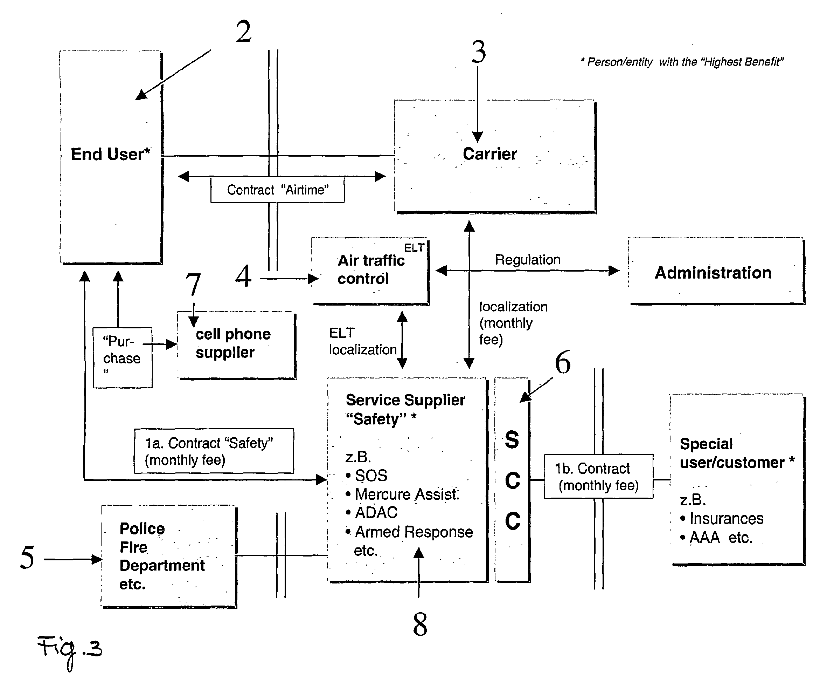

In Figure 3 an extension of this diagram is shown if the safety control centre 6 is sponsored by private and public sectors. The end user 2 himself can as before purchase a cell phone by a cell phone supplier 7 and have a contract with a cellular network provider, a carrier 3. Additionally, the end user 2 can have a certain safety contract with a safety service supplier 8, e.g. SOS, emergency assistance, an automobile association or an armed response. This safety service supplier 8 may be affiliated in some way to the service control centre 6 and be in contact with the security instance 5, e.g. police or fire brigade, or also special users and customers such as an automobile association. The safety control centre 6 has again a connection to the air traffic control 4 and the network provider 3. The air traffic control 4 may be regulated by the administration of a respective area.

## Claims

1. A method for safely making an emergency call from a communication device (2), whereby an emergency call routine is activated, comprising the steps of:
- detecting at least one available cellular communication network (3) at the location of the communication device (2),
- if a cellular communication network (3) is available, using the cellular network (3), **characterized by** the further steps of:
- in case, that no cellular communication network (3) is available, enabling a module for broadcasting over a mobile transmitter station of a global safety communication network (4) independently from any cellular communication network (3),
- in case that more than one global safety communication network (4) is existent, selecting one of the global safety network (4),
- in case that only one global safety communication network (4) is available selecting this global safety communication network (4),
- sending an emergency signal over the selected network.

2. The method according to claim 1, wherein the mobile transmitter station is a mobile beacon, by which the emergency signal from the communication device (2)is further transmitted or that functions as a transponder for said emergency signal,

3. The method according to claim 1 or 2 wherein a beacon is operable as a mobile transceiver or mobile transponder station.

4. The method according to one of claims 1 to 3 wherein a mobile beacon is an emergency location transmitter (ELT), in particular placed on an aircraft, or the beacon as an emergency position indicating radio beacon (EPIRB), in particular placed on an vessel, or the beacon is a personal location beacon (PLB)

5. The method according to one of claims 1 to 4 wherein the global safety communication network comprises a ground station for receiving the emergency signal from the mobile transmitter station.

6. The method according to claim 5 wherein a ground station is adapted to process the emergency signal to determine where the communication data is located.

7. The method according to one of claims 1 to 6 wherein the global safety communication network comprises a control centre (6, 8) for triggering an alarm.

8. The method according to any of the previous claims, whereby the emergency call routine also comprises the identification of the communication device.

9. The method according to any of the previous claims, whereby also a speech connection is established over one of the existent communication networks.

10. The method according to any of the previous claims, whereby the emergency call routine can be activated remotely.

11. A Communication device comprising means for carrying out all the steps of the methods of any of the proceeding claims.

12. The communication device according to claim 11, comprising at least two radio modules, one of said radio modules being manually or automatically activable.

13. The communication device according to claim 11 or 12, whereby the method according to claims 1 to 10 can be activated by pushing one button on the communication device.

14. The communication device according to any of the claims 11 to 13, whereby the communication device is a cellular phone.

## Patentansprüche

1. Verfahren zum sicheren Durchführen eines Notrufes von einer Kommunikationsvorrichtung (2), wobei eine Notrufroutine aktiviert wird, die Schritte umfassend:
Detektieren wenigstens eines verfügbaren Mobilfunkkommunikationsnetzes (3) an dem Ort der Kommunikationsvorrichtung (2),
wenn ein Mobilfunkkommunikationsnetz (3) verfügbar ist, Verwenden des Mobilfunknetzes (3),
**gekennzeichnet durch** die weiteren Schritte:
in dem Fall, in dem kein Mobilfunkkommunikationsnetz (3) verfügbar ist, Aktivieren eines Moduls zum Ausstrahlen über eine mobile Senderstation eines globalen Sicherheitskommunikationsnetzes (4) unabhängig von irgendeinem Mobilfunkkommunikationsnetz (3),
in dem Fall, in dem mehr als ein globales Sicherheitskommunikationsnetz (4) vorhanden ist, Auswählen eines globalen Sicherheitsnetzes (4),
in dem Fall, in dem nur ein globales Sicherheitskommunikationsnetz (4) verfügbar, Auswählen dieses globalen Sicherheitskommunikationsnetzes (4),
Senden eines Notsignales über das ausgewählte Netz.

2. Verfahren nach Anspruch 1, wobei die mobile Senderstation eine mobile Signalstation ist, mit der das Notsignal von der Kommunikationsvorrichtung (2) weiter gesendet wird oder die als Transponder für das Notsignal dient.

3. Verfahren nach Anspruch 1 oder 2, wobei eine Signalstation als ein mobiler Sendeempfänger oder als eine mobile Transponderstation betreibbar ist.

4. Verfahren nach einem der Ansprüche 1 bis 3, wobei eine mobile Signalstation ein Notfallortsender (ELT) ist, der insbesondere in einem Flugzeug angeordnet ist, oder die Signalstation eine die Notfallposition anzeigende Funksignalstation (EPIRB) ist, die insbesondere auf einem Fahrzeug platziert ist, oder die Signalstation eine persönliche Ortssignalstation (PLB) ist.

5. Verfahren nach einem der Ansprüche 1 bis 4, wobei das globale Sicherheitskommunikationsnetz eine Bodenstation zum Empfangen des Notsignals von der mobilen Senderstation umfasst.

6. Verfahren nach Anspruch 5, wobei eine Bodenstation dafür ausgelegt ist, das Notsignal zu verarbeiten, um zu bestimmen, wo die Kommunikationsdaten zu verorten sind.

7. Verfahren nach einem der Ansprüche 1 bis 6, wobei das globale Sicherheitskommunikationsnetz ein Kontrollzentrum (6, 8) zum Auslösen eines Alarms umfasst.

8. Verfahren nach irgendeinem der vorrangehenden Ansprüche, wobei die Notrufroutine ferner die Identifizierung der Kommunikationsvorrichtung umfasst.

9. Verfahren nachirgendeinem der vorrangehenden Ansprüche, wobei auch eine Sprachverbindung über eines der vorhandenen Kommunikationsnetze eingerichtet wird.

10. Verfahren nach irgendeinem der vorrangehenden Ansprüche, wobei die Notrufroutine ferngesteuert aktiviert werden kann.

11. Kommunikationsvorrichtung, die Mittel zum Ausführen aller Schritte des Verfahrens nach irgendeinem der vorrangehenden Ansprüche umfasst.

12. Kommunikationsvorrichtung nach Anspruch 11, die wenigstens zwei Funkmodule umfasst, wobei eines der Funkmodule manuell oder automatisch aktivierbar ist.

13. Kommunikationsvorrichtung nach Anspruch 11 oder 12, wobei das Verfahren nach den Ansprüchen 1 bis 10 aktiviert werden kann, indem ein Knopf auf der Kommunikationsvorrichtung gedrückt wird.

14. Kommunikationsvorrichtung nach irgendeinem der Ansprüche 11 bis 13, wobei die Kommunikationsvorrichtung ein Mobiltelefon ist.

## Revendications

1. Procédé pour faire, de manière sûre, un appel d'urgence à partir d'un dispositif (2) de communication, dans lequel un programme d'appel d'urgence est activé, comprenant les stades dans lesquels :
- on détecte au moins un réseau (3) de communication cellulaire disponible à l'emplacement du dispositif (2) de communication,
- si un réseau (3) de communication cellulaire est disponible, on utilise le réseau (3) cellulaire,
**caractérisé par** les stades supplémentaires, dans lesquels :
- dans le cas où un réseau (3) de communication supplémentaire n'est pas disponible, on permet à un module de diffuser sur une station mobile d'émetteur d'un réseau (4) global de communication de sécurité, indépendamment de tout réseau (3) de communication cellulaire,
- dans le cas où plus d'un réseau (4) global de commmunication de sécurité existe, on choisit l'un des réseaux (4) global de sécurité,
- dans le cas où seulement un réseau (4) global de communication est disponible, on choisit ce réseau (4) global de communication de sécurité,
- on envoie un signal d'urgence par le réseau choisi.

2. Procédé suivant la revendication 1, dans lequel la station mobile d'émetteur est une station mobile d'alarme, par laquelle le signal d'urgence, provenant du dispositif (2) de communication, est acheminé ou qui fonctionne en tant que transpondeur pour ce signal d'urgence.

3. Procédé suivant la revendication 1 ou 2, dans lequel une station mobile d'alarme peut fonctionner en tant qu'émetteur récepteur mobile ou en tant que station mobile de transpondeur.

4. Procédé suivant l'une des revendications 1 à 3, dans lequel une station mobile d'alarme est un émetteur (ELT) de localisation d'urgence, embarqué en particulier sur un avion, ou la station d'alarme est une station d'alarme radio d'urgence indiquant une position (EPIRB), embarquée en particulier sur un vaisseau, ou la station d'alarme est une station d'alarme de localisation personnelle (PLB).

5. Procédé suivant l'une des revendications 1 à 4, dans lequel le réseau global de communication de sécurité comprend une station au sol pour recevoir le signal d'urgence de la station mobile d'émetteur.

6. Procédé suivant la revendication 5, dans lequel une station au sol est conçue pour traiter le signal d'urgence afin de déterminer où la donnée de communication est localisée.

7. Procédé suivant l'une des revendications 1 à 6, dans lequel le réseau global de communication d'urgence comprend un centre (6, 8) de commande pour déclencher une alerte.

8. Procédé suivant l'une quelconque des revendications précédentes, dans lequel le programme d'appel d'urgence comprend aussi l'identification du dispositif de communication.

9. Procédé suivant l'une quelconque des revendications précédentes, dans lequel une connexion vocale est établie aussi par l'un des réseaux de communication existant.

10. Procédé suivant l'une quelconque des revendications précédentes, dans lequel le programme d'appel d'urgence peut être activé à distance.

11. Dispositif de communication comprenant des moyens pour effectuer tous les stades du procédés suivant l'une quelconque des revendications précédentes.

12. Dispositif de communication suivant la revendication 11, comprenant au moins deux modules radio, l'un de ces modules radio pouvant être activé manuellement ou automatiquement.

13. Dispositif de communications suivant la revendication 11 ou 12, dans lequel le procédé suivant les revendications 1 à 10 peut être activé en appuyant sur un bouton du dispositif de communication.

14. Procédé de communication suivant l'une quelconque des revendications 11 à 13, dans lequel le dispositif de communication est un téléphone cellulaire.
